# EUROPÄISCHE PATENTSCHRIFT

(11) **EP 3 348 477 B1**
(45) Veröffentlichungstag und Bekanntmachung des Hinweises auf die Patenterteilung: **10.06.2020**
(21) Anmeldenummer: 18150749.2
(22) Anmeldetag: 09.01.2018
(51) Int. Cl.: B64C 39/02

(54) **KRAFTFAHRZEUG MIT EINER START- UND LANDEVORRICHTUNG FÜR EIN UNBEMANNTES FLUGGERÄT**
MOTOR VEHICLE WITH START AND LANDING DEVICE FOR A UNMANNED AERIAL VEHICLE
VÉHICULE AUTOMOBILE AVEC UN DISPOSITIF POUR LE DECOLLAGE ET L'ATTERISAGE D'UN AERONEF NON HABITÉ

(30) Priorität: 13.01.2017 DE 102017000280
(43) Veröffentlichungstag der Anmeldung: 18.07.2018
(73) Patentinhaber: MAN Truck & Bus SE, 80995 München (DE)
(72) Erfinder: Braun, Reimar, 81735 München (DE)
(74) Vertreter: v. Bezold & Partner Patentanwälte - PartG mbB

(56) Entgegenhaltungen:
- WO-A1-2017/131194
- CN-A- 106 275 480
- DE-A1-102011 106 170
- DE-A1-102015 001 861
- DE-A1-102015 007 156
- JP-A- 2017 011 614
- US-A1- 2016 240 020
- Nikolaj Georgiew: "Mit dem Quadrocopter aus dem Auto raus und ins Auto rein", , 1. Mai 2013 (2013-05-01), XP054978095, Gefunden im Internet: URL:https://www.youtube.com/watch?v=b9uEnR JuaGE&feature=youtu.be [gefunden am 2018-02-09]

## Beschreibung

Die Erfindung betrifft ein Kraftfahrzeug mit einer Start- und Landevorrichtung für ein unbemanntes Fluggerät, insbesondere für einen Multicopter.

Im Stand der Technik sind unterschiedliche Ausgestaltungen von unbemannten Fluggeräten, auch als Drohnen bezeichnet, bekannt, beispielsweise als Tragflächen-Flugzeuge oder Drehflügler. Drehflügler wie Hubschrauber und Multicopter stellen nur geringe Bedingungen an Start- und Landepositionen und ermöglichen insbesondere im langsamen Horizontalflug oder in einer Schwebephase Detailaufnahmen. Drehflügler weisen hierzu Rotoren auf, um den nötigen Auftrieb zu erzeugen. Darüber hinaus werden vermehrt Elektromotoren in Drohnen eingesetzt, da diese im Vergleich zu Verbrennungsmotoren leicht und geräuscharm sind. Zum Antrieb der Elektromotoren müssen Batterien mitgeführt werden. Häufig werden als Drohnen sog. Multicopter eingesetzt. Unter Multicoptern werden insbesondere ferngesteuerte oder autonom fliegende Fluggeräte verstanden, welche über eine Mehrzahl von Drehflügelrotoren verfügen, wobei die Drehflügelrotoren an den Enden von Copterauslegern angeordnet sind, welche wiederum an einem Coptergrundkörper oder einem Coptergrundgestell angeordnet sind. Insbesondere werden derartige Multicopter dazu verwendet, im Nahbereich Luftaufnahmen mit hierfür geeigneten Foto- oder Videokameras zu machen, welche innerhalb des Coptergrundkörpers oder innerhalb des Coptergrundgestells angeordnet sind. Eine verbreitete Ausführungsform ist der Quadrokopter oder Vierflügler. Diese weisen vier in Bezug auf die Hochachse der Drohne in einer flachen Ebene angeordnete, senkrecht nach unten wirkende Rotoren oder Propeller auf, um Auftrieb und durch Neigung der Rotorebene Vortrieb zu erzeugen. Weiterhin erlauben die vier Rotoren in einer Ebene beispielsweise allein durch Veränderung der Drehzahl eine Steuerung um die Achsen des Rumpfes.

Unbemannte Fluggeräte (Drohnen) werden meist mit optischen Aufnahmegeräten oder Messsensoren ausgestattet und zur Überwachung eingesetzt. Dies ist dann der Fall, wenn der Einsatz von bemannten Fluggeräten entweder zu aufwändig oder für einen Piloten zu gefährlich ist.

Die Offenlegungsschrift DE 10 2013 004 881 A1 erwähnt die Möglichkeit, Lande- und Aufladestationen für Drohnen an Kraftfahrzeugen, wie Personenkraftwagen (PKWs) oder Lastkraftwagen (LKWs), anzubringen. Auch die Offenlegungsschrift DE 10 2015 110 812 erwähnt eine nicht näher beschriebene Möglichkeit, dass sich eine Drohne an einem Kraftfahrzeug befestigen und wieder davon lösen kann, um ein Kraftfahrzeug-Drohnensystem auszubilden, bei dem die Drohne das Leistungsvermögen des Kraftfahrzeugs in der selbstständigen Fahrbetriebsart erhöht.

Die Patentschrift US 8,474,161 B2 offenbart eine auf einem Militärfahrzeug befestigte Plattform, die dazu genutzt wird, um darauf ein unbemanntes Fluggerät anzuordnen. Derartige außen am Fahrzeug vorgesehen Plattformen, z. B. auf dem Dach eines Fahrzeugs, haben jedoch eine Reihe von Nachteilen. Derartige außen angebrachte Drohnenplattformen sind auch in inaktiven Betriebsphasen ständig äußeren Witterungseinflüssen ausgesetzt und anfällig für Diebstahl und Vandalismus. Außen auf dem Dach des Fahrzeugs angebrachte Drohnenplattformen erhöhen den Strömungswiderstand des Kraftfahrzeugs und damit den Verbrauch. Ein Anbringen am Tragrahmen eines Nutzfahrzeugs würde die Drohne anfällig für Beschädigungen durch Steinschlag und Schüttgut machen.

Es ist somit eine Aufgabe der Erfindung, einen verbesserten Ansatz zum Mitführen von Drohnen mit einem Kraftfahrzeug bereitzustellen, mit dem Nachteile aus dem Stand der Technik vermieden werden können. Es ist insbesondere eine Aufgabe der Erfindung, einen Ansatz bereitzustellen, mit dem herkömmliche Kraftfahrzeuge auf einfache Weise mit einem Drohnenparkparkplatz nachgerüstet werden können, der eine sichere Aufbewahrung der Drohne ermöglicht und eine schnelle Inbetriebnahme der mitgeführten Drohne ermöglicht.

Diese Aufgaben werden durch ein Kraftfahrzeug mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird ein Kraftfahrzeug mit einer Start- und Landevorrichtung für ein unbemanntes Fluggerät bereitgestellt, wobei die Start- und Landevorrichtung im Fahrzeuginnenraum auf der Beifahrerseite angeordnet ist. Dies bietet den besonderen Vorzug, dass die Drohne in einer inaktiven Phase, d. h. in der auf der Start- und Landevorrichtung geparkten Stellung, automatisch vor äußeren Witterungs- und anderen Schadensrisiken geschützt ist, so dass die vorstehend genannten Nachteile eines außenseitig am Kraftfahrzeug angeordneten unbemannten Fluggeräts, nachfolgend kurz als Drohne bezeichnet, zuverlässig vermieden werden können. Insbesondere bei Nutzfahrzeugen ist die Beifahrerseite oft selten durch Mitfahrer belegt, so dass der ansonsten ungenutzte Raum erfindungsgemäß genutzt werden kann. Ein weiterer besonderer Vorteil ist, dass nur durch Öffnen des ohnehin vorhandenen Fensters auf der Beifahrerseite auf einfache Weise eine Durchflugöffnung für die Drohne zum Starten von und Landen auf der Start- und Landevorrichtung bereitgestellt werden kann. Die Drohne kann somit auf einfache Weise in Betrieb genommen werden. Ferner ist ein Nachrüsten einer derartigen Start- und Landevorrichtung, die als Drohnenparkplatz dient, im Fahrzeuginnern besonders einfach realisierbar. Einerseits können die dort vorhanden elektrischen Anschlüsse zum elektrischen Laden der Drohne auf der Start- und Landevorrichtung genutzt werden. Andererseits stellt der Schutz vor äußeren Witterungsbedingungen, Fahrtwind etc. durch die Unterbringung im Fahrzeuginnenraum geringere Anforderungen an die Ausgestaltung der Start- und Landevorrichtung in Bezug auf Wetterbeständigkeit, Stabilität etc.

Gemäß einer Ausführungsform ist die Start- und Landevorrichtung in der in Vorwärtsfahrtrichtung gesehenen rechten Hälfte der Beifahrerseite angeordnet, also auf der der Beifahrertür zugewandten Hälfte der Beifahrerseite. Dies bietet den Vorzug, dass der Bewegungsraum des Fahrers möglichst wenig eingeschränkt wird und zugleich ein Sicherheitsabstand zum Fahrer eingehalten wird.

Gemäß einer besonders bevorzugten Ausführungsform ist das Kraftfahrzeug ein Nutzfahrzeug mit einem Fahrerhaus, wobei die Start- und Landevorrichtung im Fahrerhaus auf der Beifahrerseite angeordnet ist. Ein Fahrerhaus eines Nutzfahrzeugs eignet sich aufgrund der hohen Bauhöhe besonders für das Vorsehen der Start- und Landevorrichtung für eine Drohne. Ferner können dadurch viele vorteilhafte Einsatzszenarien von Drohnen kostengünstig realisiert werden, wie die Baustellenüberwachung, die Überwachung von Industrieanlagen und landwirtschaftlich genutzten Feldern. Das Nutzfahrzeug kann ein Lastkraftwagen (LKW), z. B. ein Kipper-LKW, ein Baustellenfahrzeug, z. B. ein Bagger, oder ein Sondereinsatzfahrzeug, z. B. ein Feuerwehrfahrzeug sein.

Die Start- und Landevorrichtung ist vorzugweise zur Aufnahme einer Drehflügler-Drohne, insbesondere eines Multicopters ausgeführt, insbesondere zur Aufnahme einer Drohne mit einem Gewicht unter 20 kg.

Gemäß einem weiteren Aspekt kann die Start- und Landevorrichtung eine elektrische Ladeschnittstelle für das unbemannte Fluggerät aufweisen, die von einem Energiespeicher für elektrische Energie des Kraftfahrzeugs und/oder einem Fahrzeugbordnetz gespeist wird. Die Start- und Landevorrichtung dient hierbei somit gleichzeitig als Ladevorrichtung für die Drohne. Im Fahrerhaus ist aufgrund der dort üblicherweise vorgesehenen Infotainment- und Fahrerassistenzsysteme ein einfacher Zugriff auf eine elektrische Stromversorgung zum Anschluss der elektrischen Ladeschnittstelle der Start- und Landevorrichtung möglich, was das Nachrüsten der Start- und Landevorrichtung in einem herkömmlichen Kraftfahrzeug erleichtert.

Eine weitere bevorzugte Ausführungsform sieht vor, dass die Start- und Landevorrichtung an einem Deckenabschnitt des Fahrzeuginnenraums befestigt ist. Auf diese Weise wird der Bewegungsraum des Fahrers wenig einschränkt. Der Fahrer kann beispielsweise weiterhin Dinge auf den Beifahrersitz ablegen. Ferner wird durch die Start- und Landevorrichtung die Sicht vom Fahrersitzplatz auf den beifahrerseitigen Außenspiegel nicht blockiert.

Erfindungsgemäß ist die Start- und Landevorrichtung lediglich in einer oberen Hälfte eines Bereichs zwischen Beifahrersitzoberfläche und Landevorrichtung angeordnet. Besonders vorteilhaft ist, wenn die Start- und Landevorrichtung in einem oberen Drittel, weiter vorzugsweise in einem oberen Viertel eines Bereichs zwischen Beifahrersitzoberfläche und Fahrzeuginnenraumdecke angeordnet ist. Die Bauhöhe moderner Multicopter-Drohnen ist teilweise nur wenige cm hoch, so dass die Start- und Landevorrichtung gemäß einer Variante platzsparend weniger als einen halben Meter unterhalb der Fahrzeuginnenraumdecke angeordnet werden kann.

Ferner besteht die Möglichkeit, dass die Start- und Landevorrichtung eine Start- und Landeplattform aufweist, auf der die Drohne landen kann. Anstatt einer Plattform könnte auch je nach Ausführung der Drohne eine Start- und Landehalterung zum Einsatz kommen, auf der die Drohne nach dem Landen hängend gehaltert ist.

Ferner kann die Start- und Landevorrichtung, insbesondere die Start- und Landeplattform, eine Schutzbarriere aufweisen, wobei sich die Schutzbarriere zwischen einem Deckenabschnitt des Fahrzeuginnenraums und einem fahrerseitigen, einem vorderen und/oder einem hinteren Randbereich der Start- und Landevorrichtung, insbesondere der Start- und Landeplattform, erstreckt. Die Schutzbarriere kann als eine die Start- und Landevorrichtung begrenzende Wandung, als Gitter oder Auffangnetz ausgeführt sein. Die Schutzbarriere verhindert, dass eine landende oder startende Drohne aufgrund einer Fehlfunktion den Fahrzeuginnenraum beschädigt oder den Fahrer verletzen kann. Ferner bietet die Barriere Schutz gegen ein Herausfallen der geparkten Drohne, z. B. verursacht durch ein abruptes Fahrmanöver.

Gemäß einem weiteren Aspekt kann die Start- und Landevorrichtung eine ein- und ausfahrbare Sicherungseinrichtung aufweisen, die im ausgefahrenen Zustand ein gelandetes Fluggerät gegen Verrutschen in der Start- und Landevorrichtung sichert. Beispielsweise kann die Sicherungseinrichtung als ein ein- und ausfahrbares, die Drohne im gelandeten Zustand sicherndes Arretierorgan ausgeführt sein, z. B. ein Haltestempel oder als ein Schnapp-, Rast- oder Click-Mechanismus ausgeführt sein.

Gemäß einem weiteren Ausführungsbeispiel umfasst das Kraftfahrzeug ferner eine Steuervorrichtung zur Steuerung des unbemannten Fluggeräts. Die Steuervorrichtung umfasst Folgendes: eine erste Schnittstelle, die dazu ausgelegt ist, Informationen an das unbemannte Fluggerät zu übertragen und/oder von diesem zu empfangen, eine zweite Schnittstelle, die dazu ausgelegt ist, Informationen an das Kraftfahrzeug zu übertragen und/oder von diesem zu empfangen, und einen Prozessor in Kommunikation mit der ersten und zweiten Schnittstelle. Die erste Schnittstelle ist vorzugsweise als Drahtlos-Schnittstelle ausgeführt, um auch im Flugbetrieb Daten mit der Drohne austauschen zu können.

Gemäß einer Variante dieser Ausführungsform ist die Steuervorrichtung, beispielsweise deren Prozessor, für Folgendes ausgelegt: Übertragen eines Fenster-Öffnungsbefehls über die zweite Schnittstelle zum zumindest teilweisen Öffnen eines Seitenfensters des Kraftfahrzeugs auf der Beifahrerseite vor der Übertragung eines Startbefehls und/oder Landebefehls über die erste Schnittstelle an das Fluggerät. Mit anderen Worten wird vor einem Start der Drohne von der Start- und Landevorrichtung und vor einer Landung der Drohne auf der Start- und Landevorrichtung jeweils von der Steuervorrichtung automatisch ein Befehl zum automatischen zumindest teilweisen Öffnen des Beifahrerfensters erzeugt, so dass das Beifahrerfenster rechtzeitig zumindest teilweise geöffnet wird und dadurch für die Drohne eine Durchflugöffnung bereitgestellt wird. Das Beifahrerfenster muss hierbei elektrisch betätigbar sein.

Vorteilhaft ist hierbei, wenn der Fenster-Öffnungsbefehl nur zur einer teilweisen Öffnung des Seitenfenster führt, wobei das teilweise geöffnete Seitenfenster eine Öffnung freigibt, die in Vertikalrichtung größer als die Bauhöhe des Fluggeräts ist.

Gemäß einer weiteren Variante kann ist die Steuervorrichtung, beispielsweise deren Prozessor, für Folgendes ausgelegt sein: Empfangen von Fahrzeugumgebungsinformationen, die von der Drohne erfasst wurden, über die erste Schnittstelle, Bestimmen von Fahrzeugsteuerungsinformationen in Abhängigkeit von den empfangenen Fahrzeugumgebungsinformationen und Übermitteln der bestimmten Fahrzeugsteuerungsinformationen über die zweite Schnittstelle an das Kraftfahrzeug.

Insbesondere für den Fall, dass das Kraftfahrzeug ein Nutzfahrzeug ist, können die Fahrzeugumgebungsinformationen Fahrbahnzustandsinformationen und/oder eine Baustellenzustandsinformationen umfassen. Eine Fahrbahnzustandsinformation kann beispielsweise einen Zustand oder eine Beschaffenheit einer Fahrbahn beschreiben, die von der Drohne mit einer Kamera oder allgemein einer Sensorvorrichtung erfasst wurde. Eine Baustellenzustandsinformation kann beispielsweise eine von der Drohne erfasste Lage oder Tiefe einer Baugrube, Positionsdaten anderer Baustellenfahrzeuge, Maschinen oder Bauten auf der Baustelle angeben.

Die Fahrzeugsteuerungsinformationen können lediglich beispielhaft eine Geschwindigkeitsvorgabe, eine Drehmomentvorgabe für das Nutzfahrzeug und/oder eine Positionierungsvorgabe für ein am Nutzfahrzeug befestigtes Arbeitsgerät umfassen.

Gemäß einem weiteren Aspekt der Erfindung wird ein Kraftfahrzeug mit einer Start- und Landevorrichtung wie in diesem Dokument beschrieben, bereitgestellt, umfassend ein unbemanntes Fluggerät, das auf der Start- und Landevorrichtung starten und landen kann. Das unbemannte Fluggerät kann eine autonom fliegende Drohne, ein Multicopter, ein Quadrocopter und/oder eine Mikrodrohne sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Seitenansicht eines Nutzfahrzeugs gemäß einem Ausführungsbeispiel der Erfindung;
- Figur 2: eine Vorderansicht des Nutzfahrzeugs aus Figur 1;
- Figur 3: ein beispielhaftes Ablaufdiagramm, dass das automatische Öffnen des Beifahrerfensters beim Start oder bei der Landung der Drohne beschreibt; und
- Figur 4: ein beispielhaftes Ablaufdiagramm, dass das Steuern eines Fahrzeugs in Abhängigkeit von von der Drohne erfassten Umgebungsdaten beschreibt.

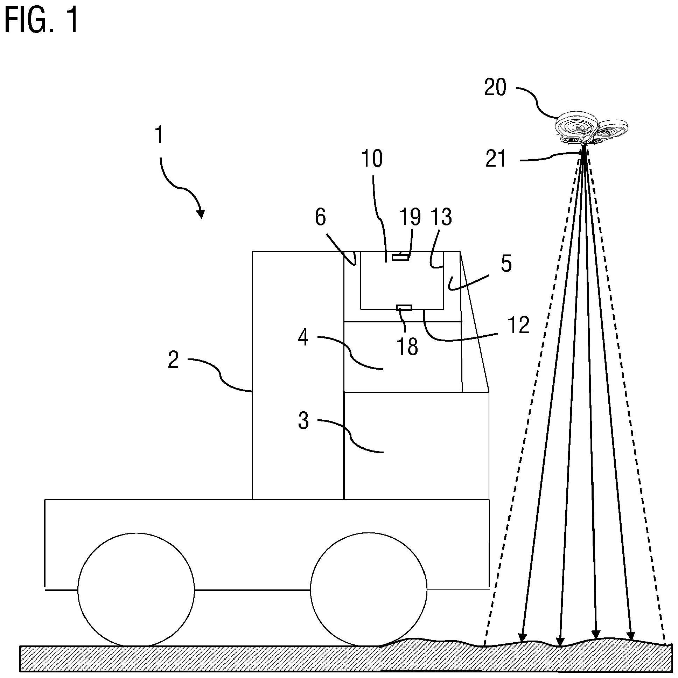

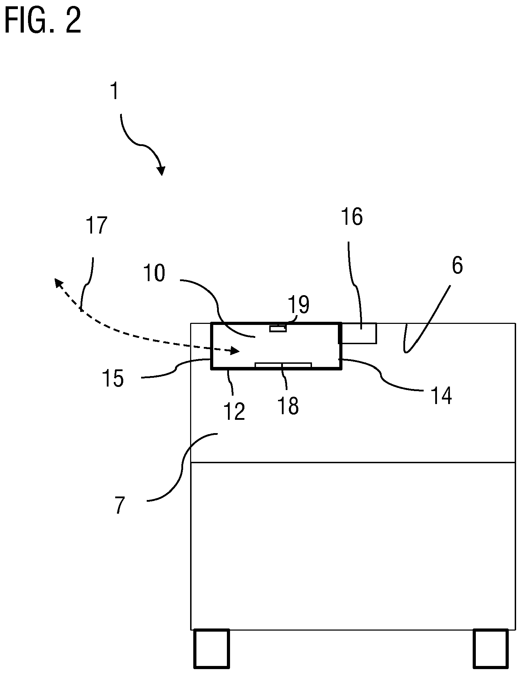

Gleiche oder funktional äquivalente Elemente sind in den Figuren 1 und 2 mit denselben Bezugszeichen bezeichnet und sind zum Teil nicht gesondert beschrieben.

Die Figuren 1 zeigt eine stark schematisierte Seitenansicht eines Nutzfahrzeugs mit einer im Fahrerhaus angeordneten Start- und Landevorrichtung für eine Drohne. Figur 2 zeigt eine stark schematisierte Vorderansicht hiervon.

Im Fahrerhaus 2 des Nutzfahrzeugs 1 ist auf der Beifahrerseite 7 unterhalb der Innenraumdecke 6 eine Start- und Landevorrichtung 10 für eine Multicopter-Drohne 20 angeordnet. Mit dem Bezugszeichen 3 ist in Figur 1 die Beifahrertür, mit dem Bezugszeichen 4 das Beifahrerfenster bezeichnet. Die Start- und Landevorrichtung 10 ist an der Fahrerhausdecke 6 befestigt und weist eine Landeplattform 12 sowie die Seitenwände 13 und 14 auf, die an ihrem unterem Ende an der Ladeplattform 12 und an ihrem oberen Ende an der Fahrzeugdecke 6 befestigt sind. An der der Beifahrertür zugewandten Seite 15 der Start- und Landevorrichtung 10 ist keine Seitenwand oder eine offene Seitenwand vorgesehen, um eine Durchgangsöffnung hin zum Seitenfenster auszubilden. Die Seitenwände 13, 14 dienen gleichzeitig als Schutzbarriere, damit die Drohne 20 im geparkten Zustand nicht aus der Start- und Landevorrichtung 10 herausfallen kann.

Die Start- und Landevorrichtung 10 ist an die Abmessungen der Multicopter-Drohne 20 angepasst, derart, dass die Start- und Landevorrichtung 10 groß genug ist, dass die Drohne 20 im Innenraum der Start- und Landevorrichtung 10 auf der Landeplattform 12 abgestellt werden kann und über das Fenster 4 der Beifahrertür 3 in Richtung Fahrzeugaußenseite starten kann oder von dieser Richtung kommend auf der Landeplattform 12 landen kann. Mit dem gestrichelten Pfeil 17 ist eine beispielhafte Lande- oder Starttrajektorie der Drohne 20 dargestellt.

Die Start- und Landevorrichtung 10 umfasst ferner eine elektrische Ladeschnittstelle 18 für die Drohne 20, die von einer Batterie des Kraftfahrzeugs versorgt wird. Die Ladeschnittstelle kann als Ladestecker oder als drahtlose Induktivladeschnittstelle ausgeführt sein.

Die Start- und Landevorrichtung 10 weist ferner eine ein- und ausfahrbare Sicherungseinrichtung auf, die im ausgefahrenen Zustand ein gelandetes Fluggerät gegen Verrutschen in der Start- und Landevorrichtung 10 sichert. Im gezeigten Ausführungsbeispiel ist die Sicherungseinrichtung lediglich beispielhaft als von oben ausfahrbarer Arretierstempel 19 ausgebildet, der im ausgefahrenen Zustand die Drohne im geparkten Zustand auf der Landeplattform 12 fixieren kann.

Das Kraftfahrzeug weist ferner eine Steuervorrichtung 16 auf, die beispielsweise als separate Steuereinheit als Teil der Start- und Landevorrichtung 10 bereitgestellt werden kann. Die Steuereinheit kann auch programmtechnisch als Applikationssoftware auf einem tragbaren Computer oder als Teil einer anderen Fahrzeugsteuerungssoftware ausgeführt sein. Die Steuervorrichtung 16 koordiniert den Datenaustausch zwischen Drohne 20 und Fahrzeug 1 und weist hierzu eine erste Schnittstelle auf, die dazu ausgelegt ist, Informationen an das unbemannte Fluggerät drahtlos zu übertragen und/oder von diesem zu empfangen. Die Steuervorrichtung 16 weist ferner eine zweite Schnittstelle auf, die dazu ausgelegt ist, Informationen an das Kraftfahrzeug zu übertragen und/oder von diesem zu empfangen. Die zweite Schnittstelle kann eine Schnittstelle, insbesondere eine Drahtlosschnittstelle zu einem Fahrzeugdatenbus sein.

Lediglich beispielhaft sind nachfolgend mögliche Ausführungsbeispiele erläutert, die das Zusammenwirken von Drohne und Fahrzeugfunktionen illustrieren.

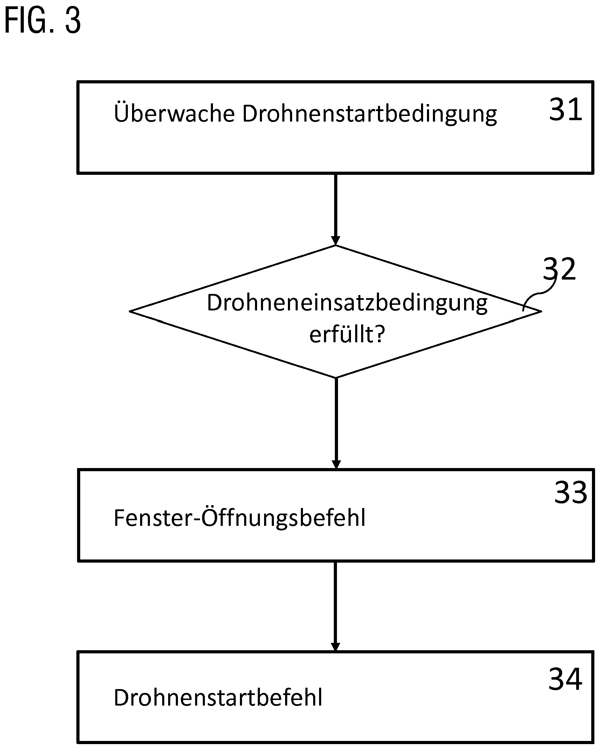

Figur 3 zeigt ein beispielhaftes Ablaufdiagramm, das das automatische Öffnen des Beifahrerfensters beim Start oder der Landung der Drohne beschreibt. Vorstehend wurde bereits festgestellt, dass ein besonderer Vorteil der Anordnung der Start- und Landevorrichtung 10 auf der Beifahrerseite im Fahrerhaus ist, dass nur durch Öffnen des ohnehin vorhandenen Fensters 4 auf der Beifahrerseite 7 auf einfache Weise eine Durchflugöffnung für die Drohne 20 zum Starten von und Landen auf der Start- und Landevorrichtung 10 bereitgestellt werden kann. Hierzu muss sichergestellt werden, dass das Beifahrerfenster beim Starten und Landen der Drohne 20 ausreichend geöffnet ist.

Beispielsweise wird hierzu von der Steuervorrichtung 16 fortlaufend eine Drohnenstartbedingung 31 überwacht, die dann erfüllt ist, wenn ein Drohnenstart unmittelbar bevor steht. Eine Drohnenstartbedingung kann beispielsweise erfüllt sein, wenn eine Bedienperson manuell die Drohne 20 einschaltet. Ist die Drohneneinsatzbedingung in Schritt 32 erfüllt, dann erzeugt die Steuervorrichtung 16 in Schritt 33 einen Fenster-Öffnungsbefehl. Der Fenster-Öffnungsbefehl wird über die zweite Schnittstelle zum Kraftfahrzeug übertragen und zum Ansteuern der elektrischen Fensterheber verwendet. Der Fenster-Öffnungsbefehl bewirkt, dass das Seitenfenster 4 des Kraftfahrzeugs 1 auf der Beifahrerseite in eine vorbestimmte Öffnungsstellung geht, die eine ausreichende Durchgangsöffnung für die Drohne 20 bereitstellt. Erst dann erzeugt die Steuervorrichtung 16 in Schritt 34 einen Startbefehl und überträgt diesen über die erste Schnittstelle an die Drohne 20.

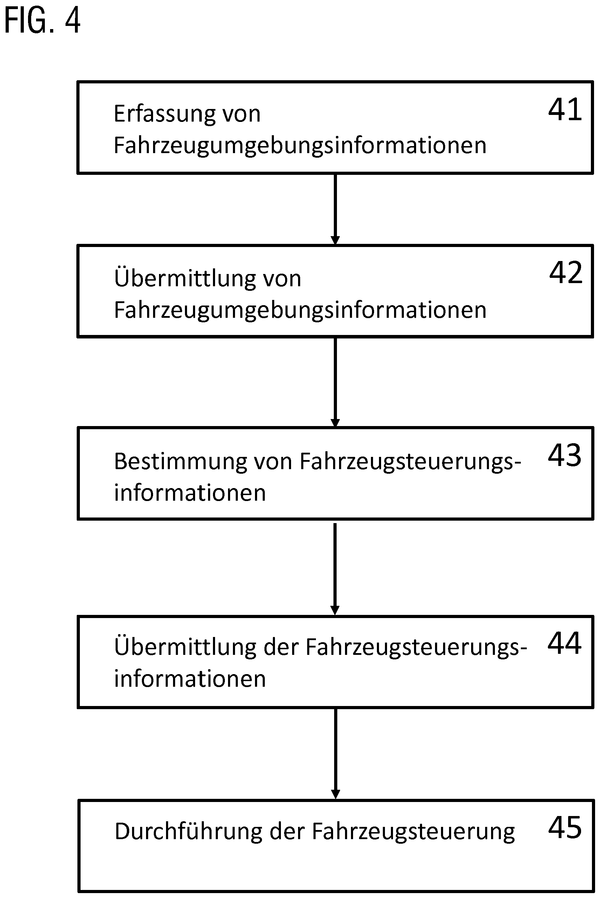

Es ist denkbar, dass die Drohne das Fahrzeug verlässt, ohne dass das Nutzfahrzeug bewegt wird. In dem Fall kann die Drohne während des Flugs auf eine Kommunikation mit dem Nutzfahrzeug verzichten. Die Drohne kann allerdings auch Funktionen am Einsatzort übernehmen, bei denen das Nutzfahrzeug Vorgaben hinsichtlich Drehmoment, Geschwindigkeit, etc. erhält. Figur 4 zeigt hierzu ein beispielhaftes Ablaufdiagramm, das das Steuern eines Fahrzeugs in Abhängigkeit von Umgebungsdaten illustriert, die von der Drohne im Flugbetrieb erfasst werden.

Im Flugbetrieb erfasst die Drohne 20 in Schritt 41 fortlaufend mit einer Kamera 21 oder einer Sensorvorrichtung Fahrzeugumgebungsinformationen, beispielsweise Fahrbahnzustandsinformationen wie in Figur 1 illustriert. Die erfassten Fahrzeugumgebungsinformationen werden fortlaufend über die erste Schnittstelle an die Steuervorrichtung 16 übermittelt (Schritt 42). Die Steuervorrichtung 16 ist programmtechnisch eingerichtet, in Abhängigkeit von den empfangenen Fahrzeugumgebungsinformationen vorbestimmte Fahrzeugsteuerungsinformationen zu bestimmten (Schritt 43) und diese über die zweite Schnittstelle an das Fahrzeug zu übermitteln (Schritt 44). Im Fahrzeug werden die Fahrzeugsteuerungsinformationen dazu verwendet, Fahrzeugfunktionen zu steuern (Schritt 45).

Ein mögliches Anwendungsbeispiel ist, dass ein Nutzfahrzeug, ausgeführt als LKW-Kipper, dazu verwendet wird, einen von einer Straße abgetragenen Teerbelag auf der Kipperladefläche aufzunehmen. Hierzu muss der LKW-Kipper eine Kriechfahrt durchführen und langsam hinter dem Teerbelagabtragungsgerät herfahren, so dass der Teerbelag optimal auf die Kipperladefläche geladen werden kann. Die Drohne kann hier fortlaufend den Fortschritt der Abtragung des Teerbelags überwachen und entsprechende Informationen als Fahrbahnzustandsinformationen an die Steuervorrichtung 16 übertragen. Die Steuervorrichtung 16 kann dann in Abhängigkeit von diesen empfangenen Fahrzeugumgebungsinformationen vorbestimmte Fahrzeugsteuerungsinformationen, z. B. als Fahrzeuggeschwindigkeitsvorgaben, erzeugen, auf deren Basis dann die Fahrzeuggeschwindigkeit geregelt wird. Auf diese Weise kann das Fahrzeug auf Basis der Drohnen-Informationen die Kriechfahrt so ausführen, dass der abgetragene Teerbelag zuverlässig aufgenommen werden kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Kraftfahrzeug, z. B. Nutzfahrzeug
- 2: Fahrerhaus
- 3: Beifahrertür
- 4: Beifahrerfenster
- 5: Fahrzeuginnenraum, z. B. Fahrerhausinnenraum
- 6: Fahrzeuginnenraumdecke
- 7: Beifahrerseite
- 10: Start- und Landevorrichtung
- 12: Plattform
- 13, 14: Seitenwände
- 15: Offene Seitenwand
- 16: Steuervorrichtung
- 17: Start- oder Landetrajektorie
- 18: Elektrische Ladeschnittstelle
- 19: Sicherungseinrichtung, z. B. Arretierstempel
- 20: Drohne, z. B. Multicopter
- 21: Kamera

## Patentansprüche

1. Kraftfahrzeug, mit einer Start- und Landevorrichtung (10) für ein unbemanntes Fluggerät (20), wobei die Start- und Landevorrichtung (10) im Fahrzeuginnenraum (5) auf der Beifahrerseite (7) angeordnet ist, **dadurch gekennzeichnet, dass** die Start- und Landevorrichtung (10) lediglich in der oberen Hälfte des Bereichs zwischen Beifahrersitzoberfläche und Fahrzeuginnenraumdecke (6) angeordnet ist.

2. Kraftfahrzeug nach Anspruch 1, **dadurch gekennzeichnet, dass** die Start- und Landevorrichtung (10) in der in Vorwärtsfahrtrichtung gesehenen rechten Hälfte der Beifahrerseite (7) angeordnet ist.

3. Kraftfahrzeug nach Anspruch 1, **dadurch gekennzeichnet, dass** das Kraftfahrzeug ein Nutzfahrzeug (1) mit einem Fahrerhaus (2) ist, wobei die Start- und Landevorrichtung (10) im Fahrerhaus (2) auf der Beifahrerseite (7) angeordnet ist.

4. Kraftfahrzeug nach einem der vorhergehenden Ansprüche, **dadurch gekennzeichnet, dass** die Start- und Landevorrichtung (10) eine elektrische Ladeschnittstelle (18) für das unbemannte Fluggerät (20) aufweist, die von einem Energiespeicher für elektrische Energie des Kraftfahrzeugs und/oder einem Fahrzeugbordnetz gespeist wird.

5. Kraftfahrzeug nach einem der vorhergehenden Ansprüche, **dadurch gekennzeichnet, dass** die Start- und Landevorrichtung (10) an einem Deckenabschnitt (6) des Fahrzeuginnenraums (5) befestigt ist.

6. Kraftfahrzeug nach einem der vorhergehenden Ansprüche, **dadurch gekennzeichnet, dass** die Start- und Landevorrichtung (10) in einem oberen Drittel, weiter vorzugsweise in einem oberen Viertel eines Bereichs zwischen Beifahrersitzoberfläche und Fahrzeuginnenraumdecke (6) angeordnet ist.

7. Kraftfahrzeug nach einem der vorhergehenden Ansprüche, **dadurch gekennzeichnet, dass** die Start- und Landevorrichtung (10) eine Start- und Landeplattform (12) und eine Schutzbarriere (13, 14, 15) aufweist, wobei sich die Schutzbarriere (13, 14, 15) zwischen einem Deckenabschnitt (6) des Fahrzeuginnenraums und einem fahrerseitigen, einem vorderen und/oder einem hinteren Randbereich der Start- und Landeplattform (12) erstreckt.

8. Kraftfahrzeug nach einem der vorhergehenden Ansprüche, **dadurch gekennzeichnet, dass** die Start- und Landevorrichtung (10) eine ein- und ausfahrbare Sicherungseinrichtung (18) aufweist, die im ausgefahrenen Zustand ein gelandetes Fluggerät gegen Verrutschen in der Start- und Landevorrichtung (10) sichert.

9. Kraftfahrzeug nach einem der vorhergehenden Ansprüche, **gekennzeichnet durch** eine Steuervorrichtung (16) zur Steuerung des unbemannten Fluggeräts, die Folgendes umfasst: eine erste Schnittstelle, die dazu ausgelegt ist, Informationen an das unbemannte Fluggerät zu übertragen und/oder von diesem zu empfangen, eine zweite Schnittstelle, die dazu ausgelegt ist, Informationen an das Kraftfahrzeug zu übertragen und/oder von diesem zu empfangen.

10. Kraftfahrzeug nach Anspruch 9, **dadurch gekennzeichnet, dass** die Steuervorrichtung für Folgendes ausgelegt ist: Übertragen eines Fenster-Öffnungsbefehls über die zweite Schnittstelle zum zumindest teilweisen Öffnen eines Seitenfensters (4) des Kraftfahrzeugs auf der Beifahrerseite (7) vor der Übertragung eines Startbefehls und/oder Landebefehls über die erste Schnittstelle an das Fluggerät (20).

11. Kraftfahrzeug nach Anspruch 9, **dadurch gekennzeichnet, dass** der Fenster-Öffnungsbefehl nur zur einer teilweisen Öffnung des Seitenfensters (4) führt, wobei das teilweise geöffnete Seitenfenster (4) eine Öffnung freigibt, die in Vertikalrichtung größer als die Bauhöhe des Fluggeräts (20) ist.

12. Kraftfahrzeug nach einem der Ansprüche 9 bis 11, **dadurch gekennzeichnet, dass** die Steuervorrichtung für Folgendes ausgelegt ist: Empfangen von Fahrzeugumgebungsinformationen über die erste Schnittstelle, Bestimmen von Fahrzeugsteuerungsinformationen in Abhängigkeit von den empfangenen Fahrzeugumgebungsinformationen und Übermitteln der bestimmten Fahrzeugsteuerungsinformationen über die zweite Schnittstelle an das Kraftfahrzeug.

13. Kraftfahrzeug nach Anspruch 11, **dadurch gekennzeichnet,**
a) dass das Kraftfahrzeug ein Nutzfahrzeug ist; und
b1) dass die Fahrzeugumgebungsinformationen Fahrbahnzustandsinformationen und/oder eine Baustellenzustandsinformationen umfassen; und/oder
b2) dass die Fahrzeugsteuerungsinformationen eine Geschwindigkeitsvorgabe, eine Drehmomentvorgabe für das Nutzfahrzeug und/oder eine Positionierungsvorgabe für ein am Nutzfahrzeug befestigtes Arbeitsgerät umfassen.

14. Kraftfahrzeug nach einem der vorhergehenden Ansprüche, ferner umfassend ein unbemanntes Fluggerät, wobei das unbemannte Fluggerät eine autonom fliegende Drohne, ein Multicopter, ein Quadrocopter und/oder eine Mikrodrohne ist.

## Claims

1. Motor vehicle with a take-off and landing device (10) for an unmanned aircraft (20), wherein the take-off and landing device (10) is arranged on the co-driver side (7) in the vehicle passenger compartment (5), **characterized in that** the take-off and landing device (10) is arranged only in the upper half of the region between the co-driver seating surface and the ceiling (6) of the vehicle passenger compartment.

2. Motor vehicle according to Claim 1, **characterized in that** the take-off and landing device (10) is arranged in the right-hand half of the co-driver side (7) when viewed in the direction of forward travel.

3. Motor vehicle according to Claim 1, **characterized in that** the motor vehicle is a utility vehicle (1) with a driver's cab (2), wherein the take-off device (10) is arranged on the co-driver side (7) in the driver's cab (2).

4. Motor vehicle according to one of the preceding claims, **characterized in that** the take-off and landing device (10) has an electrical charging interface (18) for the unmanned aircraft (20), which charging interface (18) is fed by an energy store for an electrical energy of the motor vehicle and/or by a vehicle on-board power system.

5. Motor vehicle according to one of the preceding claims, **characterized in that** the take-off and landing device (10) is attached to a ceiling section (6) of the vehicle passenger compartment (5).

6. Motor vehicle according to one of the preceding claims, **characterized in that** the take-off and landing device (10) is arranged in an upper third, more preferably in an upper quarter, of a region between the co-driver sitting surface and the vehicle passenger compartment ceiling (6).

7. Motor vehicle according to one of the preceding claims, **characterized in that** the take-off and landing device (10) has a take-off and landing platform (12) and a protective barrier (13, 14, 15), wherein the protective barrier (13, 14, 15) extends between a ceiling section (6) of the vehicle passenger compartment and a driver-side, front and/or rear edge region of the take-off and landing platform (12).

8. Motor vehicle according to one of the preceding claims, **characterized in that** the take-off and landing device (10) has an extendable and retractable safety apparatus (18) which in the extended state secures a landed aircraft against slipping in the take-off and landing device (10).

9. Motor vehicle according to one of the preceding claims, **characterized by** a control device (16) for controlling the unmanned aircraft, which control device (16) comprises the following: a first interface which is configured to transmit information to the unmanned aircraft and/or to receive information therefrom, a second interface which is configured to transmit information to the motor vehicle and/or to receive information therefrom.

10. Motor vehicle according to Claim 9, **characterized in that** the control device is configured for the following: transmitting a window opening command via the second interface for the at least partial opening of a side window (4) of the motor vehicle on the co-passenger side (7) before the transmission of a take-off command and/or landing command to the aircraft (20) via the first interface.

11. Motor vehicle according to Claim 9, **characterized in that** the window opening command only brings about partial opening of the side window (4), wherein the partially opened side window (4) clears an opening which is larger in the vertical direction than the overall height of the aircraft (20).

12. Motor vehicle according to one of Claims 9 to 11, **characterized in that** the control device is configured for the following: receiving vehicle surroundings information via the first interface, determining vehicle control information as a function of the received vehicle surroundings information, and transferring the determined vehicle control information to the motor vehicle via the second interface.

13. Motor vehicle according to Claim 11, **characterized**
a) in that the motor vehicle is a utility vehicle; and
b1) in that the vehicle surroundings information comprises vehicle status information and/or roadwork/construction site information; and/or
b2) in that the vehicle control information comprises a speed specification, a torque specification for the utility vehicle and/or a positioning specification for a working device which is attached to the utility vehicle.

14. Motor vehicle according to one of the preceding claims, also comprising an unmanned aircraft, wherein the unmanned aircraft is an autonomously flying drone, a multicopter, a quadrocopter and/or a micro-drone.

## Revendications

1. Véhicule automobile, comprenant un système de décollage et d'atterrissage (10) pour un aéronef sans pilote (20), le système de décollage et d'atterrissage (10) étant disposé dans l'habitacle du véhicule (5) du côté du passager (7), **caractérisé en ce que** le système de décollage et d'atterrissage (10) est uniquement disposé dans la moitié supérieure de la zone entre la surface du siège de passager et le plafond de l'habitacle du véhicule (6).

2. Véhicule automobile selon la revendication 1, **caractérisé en ce que** le système de décollage et d'atterrissage (10), vu dans le sens de la marche avant, est disposé dans la moitié droite du côté du passager (7) .

3. Véhicule automobile selon la revendication 1, **caractérisé en ce que** le véhicule automobile est un véhicule utilitaire (1) muni d'une cabine de conduite (2), le système de décollage et d'atterrissage (10) étant disposé dans la cabine de conduite (2) du côté du passager (7) .

4. Véhicule automobile selon l'une des revendications précédentes, **caractérisé en ce que** le système de décollage et d'atterrissage (10) possède une interface de charge électrique (18) pour l'aéronef sans pilote (20), laquelle est alimentée par un accumulateur d'énergie pour l'énergie électrique du véhicule et/ou par un réseau de bord de véhicule.

5. Véhicule automobile selon l'une des revendications précédentes, **caractérisé en ce que** le système de décollage et d'atterrissage (10) est fixé à une portion de plafond (6) de l'habitacle du véhicule (5).

6. Véhicule automobile selon l'une des revendications précédentes, **caractérisé en ce que** le système de décollage et d'atterrissage (10) est disposé dans un tiers supérieur, encore de préférence dans un quart supérieur d'une zone entre la surface du siège de passager et le plafond de l'habitacle du véhicule (6).

7. Véhicule automobile selon l'une des revendications précédentes, **caractérisé en ce que** le système de décollage et d'atterrissage (10) possède une plateforme de décollage et d'atterrissage (12) et une barrière de protection (13, 14, 15), la barrière de protection (13, 14, 15) s'étendant entre une portion de plafond (6) de l'habitacle du véhicule et une zone de bord côté conducteur, une zone de bord avant et/ou une zone de bord arrière de la plateforme de décollage et d'atterrissage (12) .

8. Véhicule automobile selon l'une des revendications précédentes, **caractérisé en ce que** le système de décollage et d'atterrissage (10) possède un dispositif de sécurité (18) rétractable et déployable qui, à l'état déployé, sécurise un aéronef ayant atterri afin qu'il ne puisse pas glisser du système de décollage et d'atterrissage (10).

9. Véhicule automobile selon l'une des revendications précédentes, **caractérisé par** un système de commande (16) destiné à commander l'aéronef sans pilote, lequel comprend les éléments suivants : une première interface qui est conçue pour transmettre des informations à l'aéronef sans pilote et/ou pour en recevoir de la part de celui-ci, une deuxième interface qui est conçue pour transmettre des informations au véhicule automobile et/ou pour en recevoir de la part de celui-ci.

10. Véhicule automobile selon la revendication 9, **caractérisé en ce que** le système de commande est conçu pour ce qui suit : transmission d'une instruction d'ouverture de fenêtre par le biais de la deuxième interface pour ouvrir au moins partiellement une fenêtre latérale (4) du véhicule automobile du côté du passager (7) avant la transmission d'une instruction de décollage et/ou d'une instruction d'atterrissage à l'aéronef (20) par le biais de la première interface.

11. Véhicule automobile selon la revendication 9, **caractérisé en ce que** l'instruction d'ouverture de fenêtre ne donne lieu qu'à une ouverture partielle de la fenêtre latérale (4), la fenêtre latérale (4) ouverte partiellement libérant une ouverture qui, dans la direction verticale, est plus grande que la hauteur hors tout de l'aéronef (20) .

12. Véhicule automobile selon l'une des revendications 9 à 11, **caractérisé en ce que** le système de commande est conçu pour ce qui suit : réception d'informations d'environnement de véhicule par le biais de la première interface, détermination d'informations de commande de véhicule en fonction des informations d'environnement de véhicule reçues et communication des informations de commande de véhicule déterminées au véhicule automobile par le biais de la deuxième interface.

13. Véhicule automobile selon la revendication 11, **caractérisé en ce que**
a) le véhicule automobile est un véhicule utilitaire ; et
b1) **en ce que** les informations d'environnement de véhicule comprennent des informations d'état de la chaussée et/ou des informations d'état d'un chantier ; et/ou
b2) **en ce que** les informations de commande de véhicule comprennent une consigne de vitesse, une consigne de couple pour le véhicule utilitaire et/ou une consigne de position pour un engin de travail fixé au véhicule utilitaire.

14. Véhicule automobile selon l'une des revendications précédentes, comprenant en outre un aéronef sans pilote, l'aéronef sans pilote étant un drone à vol autonome, un multicoptère, un quadrocoptère et/ou un microdrone.
